(19) Europäisches Patentamt
European Patent Office
Office européen des brevets

(11) **EP 1 855 925 B1**

(12) **EUROPÄISCHE PATENTSCHRIFT**

(45) Veröffentlichungstag und Bekanntmachung des Hinweises auf die Patenterteilung:
**13.09.2017   Patentblatt 2017/37**

(21) Anmeldenummer: **06707803.0**

(22) Anmeldetag: **24.01.2006**

(51) Int Cl.:
**B60T 13/52** *(2006.01)*      **B60T 8/44** *(2006.01)*

(86) Internationale Anmeldenummer:
**PCT/EP2006/050383**

(87) Internationale Veröffentlichungsnummer:
**WO 2006/092348 (08.09.2006 Gazette 2006/36)**

(54) **VERFAHREN ZUM ERKENNEN DES AUSSTEUERPUNKTS EINES UNTERDRUCK-BREMSKRAFTVERSTÄRKERS**

METHOD FOR DETECTING A VACUUM SERVO-BRAKE CONTROL POINT

PROCEDE DE DETECTION DU POINT DE REGLAGE D'UN SERVOFREIN A DEPRESSION

(84) Benannte Vertragsstaaten:
**DE FR GB**

(30) Priorität: **02.03.2005   DE 102005009423**

(43) Veröffentlichungstag der Anmeldung:
**21.11.2007   Patentblatt 2007/47**

(73) Patentinhaber: **ROBERT BOSCH GMBH**
**70442 Stuttgart (DE)**

(72) Erfinder:
• **KAESTNER, Frank**
**74321 Bietigheim-Bissingen (DE)**
• **BRUEX, Thomas**
**72070 Tuebingen (DE)**
• **GRIMM, Andreas**
**75233 Tiefenbronn-Muehlhausen (DE)**
• **BUSSMANN, Otmar**
**74232 Abstatt (DE)**

(56) Entgegenhaltungen:
WO-A-99/38741          DE-A1- 19 525 985
DE-A1- 19 632 130

EP 1 855 925 B1

**Beschreibung**

Die Erfindung betrifft eine Vorrichtung zum Ermitteln des Aussteuerpunkts eines Unterdruck-Bremskraftverstärkers gemäß dem Oberbegriff des Patentanspruchs 1, sowie ein entsprechendes Verfahren gemäß dem Oberbegriff des Patentanspruchs 3.

Unterdruck-Bremskraftverstärker dienen zum Verstärken der am Fuß-Bremspedal eines Kraftfahrzeugs ausgeübten Bremskraft. Wegen ihrer einfachen und kostengünstigen Bauweise sind sie der am meisten verbreitete Verstärkertyp in Kraftfahrzeugen.

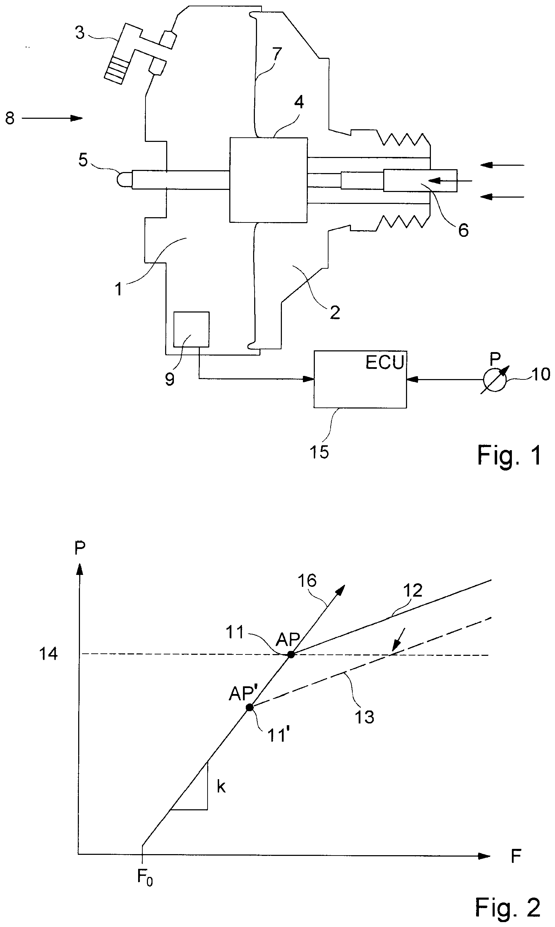

Fig. 1 zeigt eine schematische Darstellung eines herkömmlichen Unterdruck-Bremskraftverstärkers (UBKV), wie er aus dem Stand der Technik, beispielsweise der Veröffentlichung WO 99/38741 A, bekannt ist. Der UBKV umfasst im wesentlichen eine Arbeitskammer 2, eine Vakuumkammer 1 mit einem Unterdruckanschluss 3 und eine Membran 7, die die beiden Kammern 1,2 voneinander trennt. Am Unterdruckanschluss 3 ist eine Unterdruckquelle (nicht gezeigt) angeschlossen, die z. B. vom Verbrennungsmotor angetrieben wird und in der Vakuumkammer 1 einen vorgegebenen Unterdruck erzeugt. Im Zentralbereich des UBKV 8 ist ein Doppelventil 4 angeordnet, das zwei Funktionen erfüllt, nämlich a) die Arbeitskammer 2 von der Vakuumkammer 1 zu trennen bzw. die beiden Kammern 1,2 miteinander zu verbinden und b) die Arbeitskammer 2 zu belüften bzw. von der Umgebungsluft zu trennen.

Im ungebremsten Zustand ist die Verbindung zwischen der Vakuumkammer 1 und der Arbeitskammer 2 offen. In beiden Kammern 1,2 herrscht somit der gleiche Unterdruck. Bei einer Betätigung des Fuß-Bremspedals werden die beiden Kammern 1,2 voneinander getrennt und die Arbeitskammer 2 belüftet. Abhängig von der über die Kolbenstange 6 ausgeübten Bremskraft F stellt sich ein Druckniveau zwischen dem Unterdruck in der Vakuumkammer 1 und Umgebungsdruck ein. Die aus der Druckdifferenz resultierende Kraft auf die Arbeitsmembran 7 verstärkt dabei die am Bremspedal ausgeübte Bremskraft. Der vom UBKV 8 erzeugte Hilfskraftanteil ist im wesentlichen abhängig vom konstruktiven Aufbau des UBKV 8 und von dem in der Vakuumkammer 1 herrschenden Unterdruck. Nach dem Lösen des Bremspedals wird die Belüftung mit Umgebungsluft unterbrochen und das Kammerventil wieder geöffnet. Dadurch werden beide Kammern 1,2 von der Unterdruckquelle mit Unterdruck beaufschlagt.

Fig. 2 zeigt eine typische Übertragungskennlinie eines UBKV 8, die den im Bremssystem wirkenden Bremsdruck p (Vordruck) über der am Fuß-Bremspedal ausgeübten Kraft F darstellt. Der UBKV 8 geht ab einer vorgegebenen Mindestkraft $F_0$, die zur Betätigung der mechanischen Komponenten erforderlich ist, in Funktion und verstärkt dann den Bremsdruck p linear mit zunehmender Bremskraft F. Der Verstärkungsfaktor ist dabei mit k bezeichnet. Im linearen Bereich der Kennlinie nimmt der Hilfskraftanteil bis zu einem Aussteuerpunkt 11 (AP) stetig zu. Im Aussteuerpunkt 11 ist die maximale Druckdifferenz zwischen der Arbeitskammer 2 und der Vakuumkammer 1 erreicht. In der Arbeitskammer 2 herrscht dann Umgebungsluftdruck. Bei einem noch weiteren Anstieg der Bremskraft F am Fuß-Bremspedal erhöht sich der Bremsdruck p nur noch unverstärkt.

Herkömmliche UBKV 8 sind üblicherweise derart konstruiert, dass der Aussteuerpunkt 11 auch bei maximaler Betätigung des Fuß-Bremspedals nicht oder nicht wesentlich überschritten wird. Bei zu klein dimensionierten UBKVn 8 oder bei unzureichender Unterdruckversorgung in der Vakuumkammer 1 liegt der Aussteuerpunkt 11' jedoch unterhalb des Blockier-Druckniveaus 14. Die Bremskraft F wird in diesem Fall nur noch bis zum Aussteuerpunkt AP' linear verstärkt und danach nur noch unverstärkt übertragen (Linie 13). Dies führt dazu, dass nach Überschreiten des Aussteuerpunkts AP' eine weitere Erhöhung der Bremskraft einen wesentlich erhöhten Kraftaufwand am Bremspedal erfordert.

Zur Behebung dieses Problems ist es bekannt, bei Erreichen des Aussteuerpunkts 11 auf eine hydraulische Verstärkung umzuschalten und das Hydroaggregat eines Fahrdynamikregelungssystems (z.B. ESP) zu aktivieren, um zusätzlich Bremsdruck aufzubauen. Hierzu ist es erforderlich, den Aussteuerpunkt genau zu erkennen und im richtigen Zeitpunkt auf die hydraulische Verstärkung umzuschalten.

Aus dem Stand der Technik ist es bekannt, die Druckdifferenz zwischen der Arbeits- 2 und Vakuumkammer 1 mittels eines in der Arbeits- 2 und eines in der Vakuumkammer 1 angeordneten Drucksensors zu messen und bei Erreichen eines Maximums der Druckdifferenz auf die hydraulische Verstärkung umzuschalten. Hierzu sind jedoch zwei Drucksensoren erforderlich. Dies ist relativ aufwändig.

Es ist daher die Aufgabe der vorliegenden Erfindung, den Aussteuerpunkt mit geringerem sensorischen Aufwand zu erkennen.

Gelöst wird diese Aufgabe gemäß der Erfindung durch die im Patentanspruch 1 sowie im Patentanspruch 3 angegebenen Merkmale. Weitere Ausgestaltungen der Erfindung sind Gegenstand von Unteransprüchen.

Ein wesentlicher Gedanke der Erfindung besteht darin, nur in der Vakuumkammer einen Drucksensor vorzusehen und den Aussteuerpunkt allein aus dem Vakuumkammerdruck mittels einer mathematischen Funktion zu berechnen. In der Arbeitskammer des Unterdruck-Bremskraftverstärkers ist vorzugsweise kein Drucksensor vorgesehen.

Wenn der im Bremssystem herrschende Bremsdruck (der z.B. mittels eines Vordrucksensors gemessen werden kann) den berechneten Aussteuerpunkt erreicht, wird vorzugsweise automatisch auf eine hydraulische Verstärkung umgeschaltet bzw. die hydraulische Verstärkung deaktiviert. Die Berechnung des Aussteuerpunkts mittels einer mathematischen Funktion hat den wesentlichen Vorteil, dass der Aussteuerpunkt unter Verwendung nur eines einzigen Drucksensors ermittelt werden kann. Dadurch wird es möglich, einen für den Fahrer nicht mehr wahrnehmbaren Übergang zwischen pneumatischer und hydraulischer Verstärkung zu erreichen.

Die mathematische Funktion zur Berechnung des Aussteuerpunkts $p_{ap}$ ist vorzugsweise eine Geradengleichung der Form:

$$p_{ap}=m \cdot p_V+b$$

wobei $p_{AP}$ den Bremsdruck im Aussteuerpunkt, $p_V$ den in der Vakuumkammer herrschenden Unterdruck und m,b zwei Variablen bezeichnen.

Die Variablen m,b sind abhängig vom Aufbau des Unterdruck-Bremskraftverstärkers und müssen zunächst für jeden Typ separat kalibriert werden. Hierzu wird im Testbetrieb vorzugsweise folgendes Kalibrierverfahren durchgeführt:

Die Arbeitskammer wird zunächst belüftet und der Druckunterschied zwischen Arbeitskammer und Vakuumkammer aufgebaut, bis der Aussteuerpunkt sicher überschritten ist. Danach wird der Druckunterschied wieder abgebaut, wobei das Ausgangssignal des Vakuumkammer-Drucksensors ausgewertet wird. Der Aussteuerpunkt befindet sich genau dort, wo der Druckverlauf in der Unterdruckkammer ein Minimum aufweist. Der im Aussteuerpunkt herrschende Unterdruck sowie der Bremsdruck (z.B. Vordruck) werden dann gespeichert, wobei die beiden Werte (Vakuumkammerdruck; Bremsdruck) ein erstes Wertepaar bilden. Die genannten Verfahrensschritte werden dann bei einem unterschiedlichen Vakuumkammerdruck wenigstens ein zweites Mal wiederholt. Daraus ergibt sich wenigstens ein zweites Wertepaar (Vakuumkammerdruck; Bremsdruck). Mit zwei Wertepaaren ist die vorstehend genannte Geradengleichung eindeutig bestimmt und die Parameter m,b können berechnet werden.

Der Aussteuerpunkt $p_{ap}$ wird im Fahrbetrieb des Fahrzeugs abhängig vom Vakuumkammerdruck vorzugsweise regelmäßig neu berechnet. Wenn in einem Bremsmanöver der Bremsdruck den berechneten Aussteuerpunkt erreicht, kann die hydraulische Bremskraftverstärkung genau im richtigen Zeitpunkt aktiviert bzw. deaktiviert werden.

Die Funktion zur Berechnung des Aussteuerpunkts ist vorzugsweise in einem Steuergerät hinterlegt und wird von diesem berechnet. Das Steuergerät ist vorzugsweise mit dem in der Vakuumkammer angeordneten Drucksensor und einem Vordrucksensor zur Messung des Bremsdrucks verbunden.

Die Erfindung wird nachstehend anhand der beigefügten Zeichnungen beispielhaft näher erläutert. Es zeigen:

Fig. 1 eine schematische Darstellung eines aus dem Stand der Technik bekannten Unterdruck-Bremskraftverstärkers;

Fig. 2 eine typische Verstärkungskennlinie eines Unterdruck-Bremskraftverstärkers;

Fig. 3 den Verlauf verschiedener Kenngrößen; und

Fig. 4 die wesentlichen Verfahrensschritte eines Kalibrierverfahrens.

Fig. 1 zeigt einen aus dem Stand der Technik bekannten Unterdruck-Bremskraftverstärker 8 (UBKV). Bezüglich der technischen Erläuterung wird auf die Beschreibungseinleitung verwiesen. Im Unterschied zu bekannten UBKV umfasst der dargestellte UBKV 8 eine Sensorik zur Bestimmung des Aussteuerpunkts 11. Diese umfasst einen in der Vakuumkammer 1 angeordneten Drucksensor 9, dessen Ausgangssignal von einem Steuergerät 15 ausgewertet wird. Das Steuergerät 15 berechnet den Aussteuerpunkt 11 anhand einer mathematischen Funktion, die das Verstärkungsverhalten des UBKV 8 mittels einer Geradengleichung approximiert, wobei gilt:

$$p_{ap}=m \cdot p_V+b$$

wobei $p_{AP}$ den Bremsdruck im Aussteuerpunkt, $p_V$ den in der Vakuumkammer herrschenden Unterdruck und m,b zwei Variablen bezeichnen.

Wenn der im Bremssystem herrschende Bremsdruck p gleich dem berechneten Wert $p_{AP}$ ist, ist der Aussteuerpunkt erreicht. In diesem Fall kann z.B. ein Hydroaggregat (nicht gezeigt) aktiviert bzw. deaktiviert werden, um eine hydraulische Verstärkung des Bremsdrucks p automatisch zu- bzw. abzuschalten, so dass der Bremsdruck p auf der Geraden 16 (siehe Fig. 2) verläuft. Der im Bremssystem herrschende Bremsdruck p wird z.B. mittels eines Vordrucksensors 17 gemessen, der ebenfalls mit dem Steuergerät 15 verbunden ist. Die kontinuierliche Bremskraftverstärkung wird dadurch nicht unterbrochen.

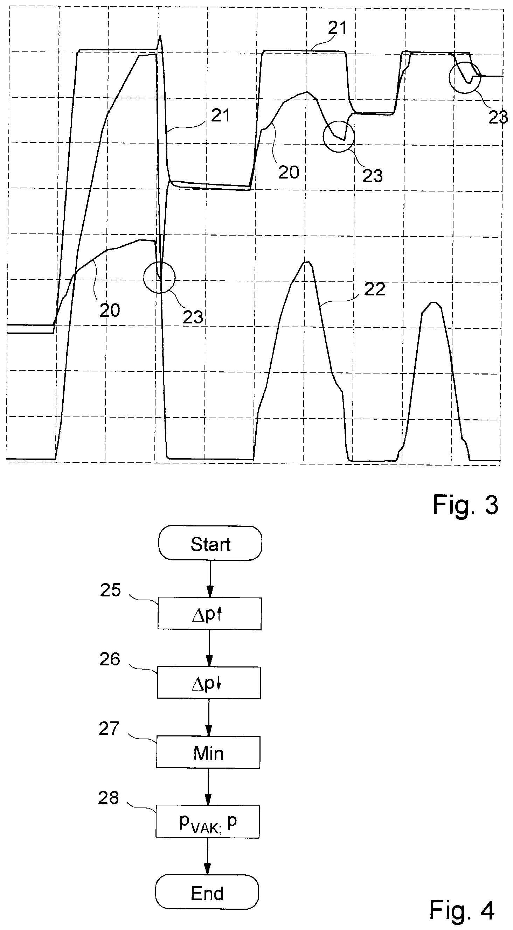

Fig. 3 zeigt verschiedene Druckverläufe im Bremssystem, wobei das Bezugszeichen 20 den Druckverlauf in der Vakuumkammer 1 (Ausgangssignal des Drucksensors 9), das Bezugszeichen 21 den in der Arbeitskammerdruck und das Bezugszeichen 22 den Bremsdruck (Vordruck) bezeichnen. Die Luftdrücke 20,21 sind dabei relativ zum Umgebungsdruck aufgezeichnet, der auf der Höhe des oberen Plateaus des Arbeitskammerdrucks 21 liegt. Der Druckverlauf wird im Folgenden noch näher kommentiert.

Die Variablen m,b der Verstärkerfunktion sind von Verstärker zu Verstärker unterschiedlich und müssen zunächst kalibriert werden. Dies kann mittels eines Kalibrierverfahrens durchgeführt werden, das beispielhaft in Fig. 4 dargestellt ist.

In Schritt 25 wird zunächst die Arbeitskammer 2 belüftet und der Differenzdruck zwischen den beiden Kammern 1,2 erhöht, bis der Aussteuerpunkt 11 sicher überschritten ist. Dies zeigt sich in Fig. 3 am Erreichen eines Plateaus im Arbeitskammerdruck 21, wo der Druck gleich dem Umgebungsluftdruck ist.

Der Druckunterschied wird danach in Schritt 26 wieder abgebaut und dabei das Ausgangssignal des Drucksensors 9 (Kennlinie 20) ausgewertet. Die Verstärkungskennlinie von Fig. 2 wird dabei in Rückwärtsrichtung von oben nach unten durchlaufen. Durch die Reduktion der Bremskraft erhöht sich zunächst das Volumen der Vakuumkammer 1 und der Druck 20 in der Vakuumkammer 1 sinkt. Das Erreichen des Aussteuerpunkts 11 ist durch ein Minimum 23 im Druckverlauf 20 gekennzeichnet. Genau im Minimum 23 öffnet das Ventil 4 zwischen den Kammern 1,2, wodurch ein Druckausgleich zwischen den Kammern 1,2 stattfindet. Dies führt wiederum zu einem Anstieg des Drucks 20 in der Vakuumkammer 1. (Wegen der in diesem Beispiel fehlenden Unterdruckquelle bleibt der Vakuumkammerdruck 20 auf diesem Niveau.)

Das Minimum 23 im Druckverlauf 20 wird in Schritt 27 durch Signalauswertung detektiert.

Der im Aussteuerpunkt 11 herrschende Vakuumkammerdruck 20 ebenso wie der zu diesem Zeitpunkt im Bremssystem herrschende Bremsdruck p werden dann in Schritt 28 gespeichert. Die vorstehend genannten Verfahrensschritte werden danach wenigstens einmal wiederholt und ein neues Wertepaar (Vakuumkammerdruck; Bremsdruck) gemessen. Mit zwei Wertepaaren ist die vorstehend genannte Funktion eindeutig bestimmt, so dass die Parameter m,b berechnet werden können.

Der Aussteuerpunkt $p_{AP}$ kann somit im Betrieb des Fahrzeugs jederzeit genau erkannt werden, wobei allein der in der Vakuumkammer 1 herrschende Unterdruck berücksichtigt werden muss. Auf einen zusätzlichen Drucksensor in der Arbeitskammer 2 des UBKV 8 kann verzichtet werden.

Bezugszeichenliste

| | |
|---|---|
| 1 | Vakuumkammer |
| 2 | Arbeitskammer |
| 3 | Unterdruckanschluss |
| 4 | Doppelventil |
| 5 | Druckstange |
| 6 | Kolbenstange |
| 7 | Arbeitsmembran |
| 8 | Unterdruck-Bremskraftverstärker |
| 9 | Drucksensor |
| 10 | Bremsdrucksensor |
| 11 | Aussteuerpunkt |
| 12 | unverstärkter Bereich |
| 13 | unverstärkter Bereich bei reduziertem Unterdruck |
| 14 | Blockier-Bremsdruck |
| 15 | Steuergerät |
| 16 | Verstärkungsgerade |
| 20 | Druck in Vakuumkammer |
| 21 | Druck in Arbeitskammer |
| 22 | Bremsdruckverlauf |
| 25-28 | Verfahrensschritte |
| p | Bremsdruck |

**Patentansprüche**

1. Vorrichtung zum Ermitteln des Aussteuerpunkts (11) eines Unterdruck-Bremskraftverstärkers (8) mit einer Vakuumkammer (1) und einer Arbeitskammer (2), die durch eine Membran (7) von einander getrennt sind **gekennzeichnet durch**:

   - einen in der Vakuumkammer (1) anzuordnenden Drucksensor (9) und
   - eine mit dem Drucksensor (9) verbundene Auswerteelektronik (15), die den Aussteuerpunkt (11) mit Hilfe einer mathematischen Funktion allein auf der Grundlage des vom Drucksensor ermittelten Drucks berechnet.

2. Verfahren zum Ermitteln des Aussteuerpunkts (11) eines Unterdruck-Bremskraftverstärkers (8) mit einer Vakuumkammer und einer Arbeitskammer, **gekennzeichnet durch** folgende Schritte:

   - Messen des in der Vakuumkammer (1) herrschenden Drucks mittels eines Drucksensors (9),
   - Berechnen des Aussteuerpunkts (11) mit Hilfe einer mathematischen Funktion allein auf Grundlage des in der Vakuumkammer (1) herrschenden Drucks.

3. Verfahren nach Anspruch 2, **dadurch gekennzeichnet, dass** die mathematische Funktion mehrere Parameter (m,b) aufweist, die mittels eines Kalibrierverfahrens kalibriert werden, bei dem der Druckunterschied zwischen der Arbeitskammer (2) und der Vakuumkammer (1) in einem ersten Schritt erhöht wird, bis der Aussteuerpunkt (11) sicher überschritten ist, der Druckunterschied danach wieder abgebaut wird, wobei das Ausgangssignal des Drucksensors (9) ausgewertet und der Aussteuerpunkt (11) detektiert wird, und der am Aussteuerpunkt (11) in der Vakuumkammer (1) herrschende Unterdruck sowie der Bremsdruck gespeichert werden, um die Parameter (m,b) zu kalibrieren.

4. Verfahren nach Anspruch 3, **dadurch gekenn-**

**zeichnet, dass** der Aussteuerpunkt (11) detektiert wird, wenn das Drucksignal (20) des Drucksensors (9) ein Minimum (23) aufweist.

5. Verfahren nach einem der Ansprüche 2 bis 4, **dadurch gekennzeichnet, dass** die mathematische Funktion wie folgt lautet:

$$p_{ap} = m \cdot p_v + b$$

wobei p den Bremsruck im Aussteuerpunkt, p den in der Vakuumkammer herrschenden Unterdruck und m und b zwei Variablen bezeichnen, wobei die Variablen m und b vom Aufbau des Unterdruck-Bremskraftverstärkers abhängig sind und zunächst für jeden Typ kalibriert werden müssen.

6. Verfahren nach Anspruch 3, **dadurch gekennzeichnet, dass** die in Anspruch 3 genannten Verfahrensschritte wenigstens zweimal durchgeführt werden.

## Claims

1. Device for determining the modulation point (11) of a vacuum brake booster (8) having a vacuum chamber (1) and a working chamber (2) which are separated from one another by a diaphragm (7), **characterized by**:

    - a pressure sensor (9) which is to be arranged in the vacuum chamber (1) and
    - evaluation electronics (15) which are connected to the pressure sensor (9) and which calculate the modulation point (11) using a mathematical function, solely on the basis of the pressure determined by the pressure sensor.

2. Method for determining the modulation point (11) of a vacuum brake booster (8) having a vacuum chamber and a working chamber, **characterized by** the following steps:

    - measuring the pressure prevailing in the vacuum chamber (1) by means of a pressure sensor (9),
    - calculating the modulation point (11) using a mathematical function, solely on the basis of the pressure prevailing in the vacuum chamber (1).

3. Method according to Claim 2, **characterized in that** the mathematical function has a plurality of parameters (m, b) which are calibrated by means of a calibration method, in which the pressure difference between the working chamber (2) and the vacuum chamber (1) is increased in a first step until the modulation point (11) is reliably exceeded, and the pressure difference is then reduced again, wherein the output signal of the pressure sensor (9) is evaluated and the modulation point (11) is detected, and the partial vacuum prevailing at the modulation point (11) in the vacuum chamber (1) and the brake pressure are stored in order to calibrate the parameters (m, b).

4. Method according to Claim 3, **characterized in that** the modulation point (11) is detected if the pressure signal (20) of the pressure sensor (9) is at a minimum (23).

5. Method according to one of Claims 2 to 4, **characterized in that** the mathematical function is as follows:

$$p_{ap} = m \cdot p_v + b$$

where $p_{ap}$ denotes the brake pressure at the modulation point, $p_v$ denotes the partial vacuum prevailing in the vacuum chamber, and m and b denote two variables, wherein the variables m and b are dependent on the design of the vacuum brake booster and have to be calibrated initially for each type.

6. Method according to Claim 3, **characterized in that** the method steps specified in Claim 3 are carried out at least twice.

## Revendications

1. Dispositif pour déterminer le point de réglage (11) d'un servofrein à dépression (8) avec une chambre à vide (1) et une chambre de travail (2), lesquelles sont séparées l'une de l'autre par une membrane (7), **caractérisé par** :

    - un capteur de pression (9) à disposer dans la chambre à vide (1), et
    - une électronique d'évaluation (15) reliée au capteur de pression (9), laquelle calcule le point de réglage (11) à l'aide d'une fonction mathématique sur la seule base de la pression déterminée par le capteur de pression.

2. Procédé pour déterminer le point de réglage (11) d'un servofrein à dépression (8) avec une chambre à vide et une chambre de travail, **caractérisé par** les étapes suivantes :

    - la mesure de la pression régnant dans la chambre à vide (1) au moyen d'un capteur de pression (9),

- le calcul du point de réglage (11) à l'aide d'une fonction mathématique sur la seule base de la pression qui règne dans la chambre à vide (1).

3. Procédé selon la revendication 2, **caractérisé en ce que** la fonction mathématique présente plusieurs paramètres (m, b) qui sont calibrés au moyen d'un procédé de calibrage où la différence de pression entre la chambre de travail (2) et la chambre à vide (1) est augmentée lors d'une première étape jusqu'à ce que le point de réglage (11) soit dépassé de façon sûre, la différence de pression étant ensuite de nouveau réduite, dans lequel le signal de sortie du capteur de pression (9) est évalué et le point de réglage (11) est détecté, et la dépression régnant au niveau du point de réglage (11) dans la chambre à vide (1) ainsi que la pression de freinage étant enregistrées pour calibrer les paramètres (m, b).

4. Procédé selon la revendication 3, **caractérisé en ce que** le point de réglage (11) est détecté lorsque le signal de pression (20) du capteur de pression (9) présente un minimum (23).

5. Procédé selon l'une des revendications 2 à 4, **caractérisé en ce que** la fonction mathématique est telle que suit :

$$p_{ap} = m \cdot p_v + b$$

où $p_{ap}$ désigne la pression de freinage au point de réglage, $p_v$ la dépression régnant dans la chambre à vide et m et b deux variables, les variables m et b dépendant de la structure du servofrein à dépression et devant tout d'abord être calibrées pour chaque type.

6. Procédé selon la revendication 3, **caractérisé en ce que** les étapes du procédé mentionnées dans la revendication 3 sont réalisées au moins deux fois.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9938741 A